# EUROPÄISCHE PATENTSCHRIFT

(11) **EP 3 535 191 B1**
(45) Veröffentlichungstag und Bekanntmachung des Hinweises auf die Patenterteilung: **30.09.2020**
(21) Anmeldenummer: 17840427.3
(22) Anmeldetag: 01.11.2017
(51) Int. Cl.: B65B 31/04, B65D 77/04, B65D 81/02, B65D 81/07, B65D 5/50, B65D 81/20, B64C 39/02, B64F 1/32, G06Q 10/08, B65B 55/20

(54) **VERPACKUNGSVERFAHREN UND TRANSPORTVERPACKUNG SOWIE DROHNE ZUR VERPACKUNGSAUFNAHME**
PACKAGING METHOD, PACKAGE AND DRONE FOR RECEIVING PACKAGE
METHODE D'EMBALLAGE, EMBALLAGE ET DRONE POUR ACCUEILLIR L'EMBALLAGE

(30) Priorität: 01.11.2016 DE 102016012963
(43) Veröffentlichungstag der Anmeldung: 11.09.2019
(73) Patentinhaber: König, Armin, 66649 Oberthal (DE)
(72) Erfinder: KÖNIG, Armin, 66649 Oberthal (DE); WAGNER, Jörg, 54329 Konz (DE)
(74) Vertreter: Kutsch, Bernd
(86) Internationale Anmeldenummer: PCT/DE2017/000361
(87) Internationale Veröffentlichungsnummer: WO 2018/082725

(56) Entgegenhaltungen:
- EP-A1- 2 504 241
- GB-A- 1 001 757
- US-A- 2 615 707
- US-A- 4 606 460
- US-A1- 2005 121 354
- US-A1- 2006 108 256
- US-B1- 9 387 928

## Beschreibung

Die Erfindung betrifft ein Verpackungsverfahren und eine Transportverpackung, wie beispielsweise aus EP 2 504 241 B1, der US 4 606 460 A oder der US 2005/121354 A1 bekannt, sowie eine Drohne zur entsprechenden Verpackungsaufnahme.

Bekannte Transportverpackungen bestehen beispielsweise aus Kunststoff oder aus Wellpappe. Um in ihnen ein zu transportierendes Gut vor Stößen oder Feuchtigkeit zu schützen, werden Polstermaterialien oder hygroskopische Trockenpäckchen mit eingepackt und versandt. Diese Schutzmaterialien werden nach Versand entsorgt, selten wiederverwendet. Das Verpacken ist trotz solcher Polsterungen oft nicht immer sicher gelungen. Das Gut liegt nicht immer mit ausreichend Polster zu allen Seiten oder bleibt während des Transports nicht mit ausreichend Polster zu allen Seiten verstaut, weil es während des Transports zu Vibrationen kommt. Das hygroskopische Material hat nur eine gewisse Kapazität und diese Kapazität ist beispielsweise auf dem Seeweg irgendwann erschöpft. Das Gut kann also trotz giftigem Beipack feucht werden und man sieht das dem nun mangelhaften Gut bei Ankunft nicht sicher an.

Bekannte Drohnen weisen zumindest einen Grundkörper, einen Rotor und ggf. Stützbeine auf.

Die Aufgabe der Erfindung besteht darin, das Verpacken zu verbessern, ggf. unter Bereitstellung einer neuen Verpackung, insbesondere auch zum Transport mittels Drohnen.

Diese Aufgabe wird gelöst durch ein Verpackungsverfahren und eine Transportverpackung nach den nebengeordneten Hauptansprüchen. Außerdem löst eine das gelehrte Verpackungsprinzip nutzende Drohne das Problem einer Aufnahme von Verpackungen in Drohnen.

Vorteilhafte Ausführungsformen sind in Unteransprüchen, in der Beschreibung und/oder den Figuren offenbart.

Ein erfindungsgemäßes Verpackungsverfahren legt zunächst eine zu verpackende Ware in eine offene innere Umhüllung einer Verpackung ein, wobei oder wonach die innere Umhüllung an elastischen Zugseilen durch Zug von außen vorgespannt ist oder beispielsweise mit elastischen Zugseilen außen an äußeren Spannpunkten einhängbar ist. Die Ware wird mithin etwa mittig in einer äußeren Verpackung oder in einem äußeren Gestell gehalten. Nach dem Einlegen der Ware wird die innere Umhüllung geschlossen und weitgehend vakuumiert, bis die innere Umhüllung eng an der Ware anliegt. Dabei bewirkt das Vakuumieren eine zusätzliche Dehnung der Zugseile. Das zumindest weitgehende Vakuumieren spannt demnach die Zugseile weiter und positioniert umso sicherer die Ware etwa im Zentrum der Verpackung.

Es wird dazu kein Puffermaterial benötigt. Es wird ferner zum Trockenhalten kein hygroskopisches Material benötigt, das giftig ist und der Ware beigelegt werden müsste. Die Gewähr für einen bleibend abgedichteten Transport der Ware gibt ein bei Ankunft der Ware immer noch anliegender Unterdruck, womit das weitgehende Vakuum gemeint sein soll.

Eine vorteilhafte Ausführungsform des Verpackungsverfahrens hängt die Zugseile außen nicht etwa in eine klassische Verpackung wie eine Klappbox aus Kunststoff oder eine Wellpappenverpackung ein, sondern in Stützbeine einer Drohne. Äußere Wände hat diese Art der Drohnenverpackung nicht, ggf. aber ein Spanntuch zwischen den Stützbeinen. Die Stützbeine der Drohne sind mithin ein Äußeres der Verpackung. Besonders bevorzugt sind nach dem Vakuumieren die Stützbeine weiter spreizbar, um die Zentrierung in einem Schutzbereich zu optimieren, insbesondere je nach Größe und Form der Ware ggf. auch erst während des Fluges der Drohne deren Aerodynamik zu verbessern.

Eine weitere vorteilhafte Transportverpackung mit einem äußeren Behälter und einer vakuumierbaren inneren Umhüllung weist zwischen den äußeren Behälter und die innere Umhüllung gespannte Seile auf, von denen zumindest eines reversibel dehnbar ausgebildet ist.

Eine weitere vorteilhafte Transportverpackung weist eine bevorzugt abnehmbare Vakuumierpumpe auf, welche an die innere Umhüllung angeschlossen ist. Ein Vakuumieranschluss verbindet in einer weiteren vorteilhaften Ausführungsform von der inneren Umhüllung nach außen durch den äußeren Behälter hindurch und ist von außen verschließbar.

Eine erfindungsgemäße Drohne mit zumindest einem Grundkörper, zumindest einem Rotor und zumindest zwei Stützbeinen weist zum Warentransport unter dem Grundkörper eine wasserdicht und gasdicht verschließbare Umhüllung auf, und zwar gespannt zwischen den zumindest zwei Stützbeinen, bevorzugt aber gespannt zwischen dem Grundkörper und vier Stützbeinen. In diese Umhüllung ist eine zu transportierende Ware einlegbar, um die herum sich die Umhüllung nach einem Vakuumiervorgang angeschmiegt hat. Beim Vakuumieren schrumpft die Umhüllung von entspannten Abmaßen auf angesaugte engere Abmaße, sodass sich die Aufhängungen spannen und sodass mithin die Ware unter der Drohne eingespannt gesichert gehalten ist. Selbst bei einem Absturz kann die Ware auf diese Weise gut geschützt sein, wenn gemäß einer besonders bevorzugten Ausführungsform zuunterst ein Spanntuch zwischen die Stützfüße gespannt ist.

Die Erfindung erkennt demnach zahlreiche Vorteile einer Verwendung des erfindungsgemäßen Verpackungsverfahrens oder einer erfindungsgemäßen Transportverpackung zum Warentransport mittels einer Drohne.

Nachfolgend wird die Erfindung anhand von Figuren in Ausführungsbeispielen beschrieben.

Es zeigen
Fig. 1 eine erfindungsgemäße Transportverpackung nach einem ersten Ausführungsbeispiel, die zusammenklappbar ist,
Fig. 2 eine erfindungsgemäße Transportverpackung nach einem zweiten Ausführungsbeispiel, die einen starren Grundkörper aufweist,
Fig. 3 eine erfindungsgemäße Transportverpackung nach einem dritten Ausführungsbeispiel nach dem Befüllen einer Innenhülle mit einem Gut,
Fig. 4 die Transportverpackung aus Figur 3 mit um das Gut vakuumierten Innenhülle und
Fig. 5 eine Drohne mit integrierter erfindungsgemäßer Verpackung.

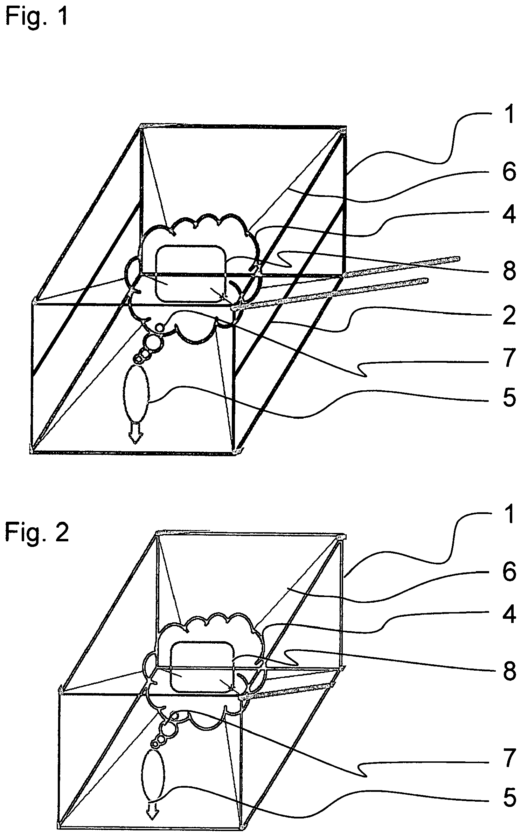

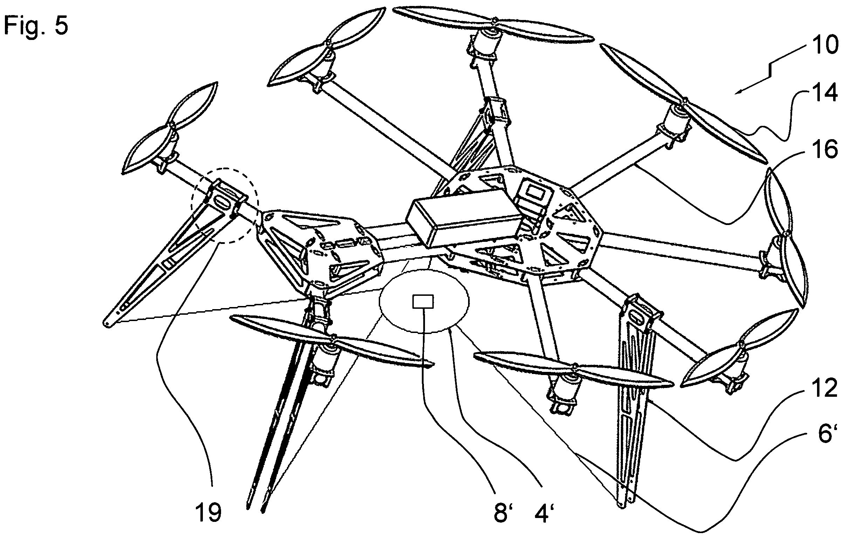

Die Figuren 1 bis 4 zeigen drei Ausführungsbeispiele erfindungsgemäßer Transportverpackungen. Figur 5 zeigt eine erfindungsgemäße Drohne gemäß einem vorteilhaften Ausführungsbeispiel.

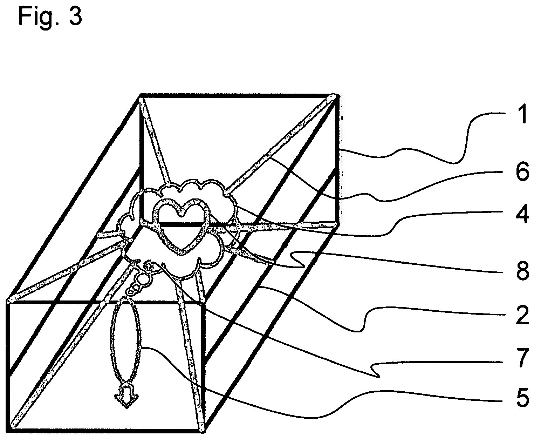

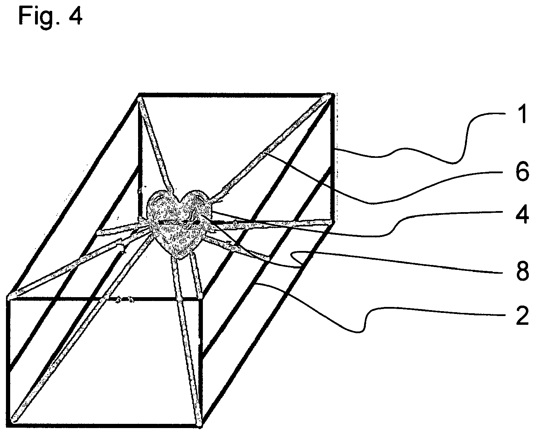

Figur 1 zeigt außen einen Faltkarton als eine äußere Verpackung oder äußeren Behälter 1 mit einem horizontalen Knickgelenk in zumindest zwei Seitenwänden, jeweils als Scharnier 2 zwischen zwei Seitenwandhälften, um den Faltkarton ziehharmonikamäßig zusammenklappen oder aufstellen zu können. Figur 1 zeigt den aufgestellten Faltkarton mit mehreren Zugseilen 6 von den Ecken und manchen Seitenwänden hin zur Mitte. In der Mitte ist eine innere Umhüllung 4 an den Zugseilen 6 gehalten, welche Zugseile 6 die Umhüllung 4 auseinander ziehen. Damit wird die Umhüllung für das Einsetzen eines Gutes, der zu transportierenden Ware 8, in den Figuren 3 und 4 als Herz dargestellt, aufgehalten.

In einem weiteren Verfahrensschritt wird die eingespannte innere Umhüllung 4 geschlossen und vakuumiert. Dabei zieht die Umhüllung 4, weil sie schrumpft, verstärkt an den Zugseilen 6. Die Zugseile 6 werden also über eine Grundspannung hinaus weiter gespannt. Das Gut ist dicht in der Umhüllung 4 vakuumiert vor Feuchtigkeit geschützt und mittels der Zugseile 6 etwa mittig im Faltkarton gehalten, sodass Stöße gegen die Außenwände des Faltkartons das Gut nicht erreichen sollten. Sind die Stöße so stark, dass das Gut doch beeinträchtigt wird, würde man den Schaden dem Faltkarton jedoch eindeutig ansehen.

Besonders bevorzugt ist an Gummiseilen als Zugseile 6 ein Vakuumbeutel mit Zugschnellverschluss angebracht. Dahinein wird die zu versendende Ware 8 eingebracht. Mit einer Handpumpe 5, die im Karton während des Transports verbleiben kann, wird ein Vakuum gezogen. Die Zugseile 6 spannen sich dabei immer mehr, bis die Zentrierung der Ware 8 in einer Mehrwegtransportverpackung erreicht ist (Fig. 4). Um zu verhindern, dass ein nicht ausreichendes Vakuumieren geschieht, ist gemäß einer bevorzugten Ausführungsform auf einer Innenseite eines Saugventils ein Abstandhalter angeordnet, bevorzugt ein Sieb 7, der einen Verschluss des Saugventils innen verhindert, beispielsweise durch Überlappen der Umhüllung 4 oder durch Kontakt mit der Ware 8.

Das Verpacken einer zu schützenden Ware 8 gelingt auf diese Weise schneller. Die gesamte Transportverpackung kann platzsparend gelagert werden. Voluminöses oder giftiges Schutzmaterial wie Silikatgel wird nicht benötigt. Die Ware ist im Vakuumbeutel, der inneren Umhüllung 4, sicher vor Feuchtigkeit geschützt. Man sieht es der Verpackung beim Auspacken an, falls das Vakuum, gemeint ist ein ausreichender Unterdruck, nicht mehr gehalten werden konnte. Es ist hier eine individuelle Aufnahme diverser Warenformen realisiert, ohne dass teure Formverpackungen verwendet werden müssen.

Eine bevorzugte Ausführungsform einer erfindungsgemäßen Transportverpackung überwacht mittels eines nicht näher dargestellten Drucksensors ähnlich wie bei bekannten PKW-Reifendrucküberwachungssystemen das in der inneren Umhüllung 4 herrschende Vakuum. Mithin ist das Vakuum und damit die Unversehrtheit unabhängig über eine Transportkette mit mehreren Dienstleistern hinweg überwachbar.

Figur 5 zeigt eine Drohne 10 mit einem geteilten Grundkörper 18, mehrere Rotoren 14 und zumindest vier Stützbeinen 12. Unterhalb des Grundkörpers 18 ist erfindungsgemäß, in diesem Ausführungsbeispiel aber mit gleichen Bezugszeichen gekennzeichnet, die apostrophiert sind, eine wasserdicht und gasdicht verschließbare Umhüllung 4' spannbar aufgenommen, mit Zugseilen 6' zu den Stützbeinen 12 und dem Grundkörper 18 hin gespannt. In die Umhüllung 4' ist eine Ware 8' eingelegt, um die herum sich die Umhüllung 4' schrumpfen lässt, sodass sich die Zugseile 6' weiter spannen. Das dargestellte Ausführungsbeispiel zeigt außerdem, dass die Drohne 10 Gelenke 19 aufweist, beispielsweise zwischen den Stützbeinen 12 und Rotorarmen 16, um die Stützbeine 12 weiter spreizen zu können, sodass sich der gesamte Drohnenaufbau bevorzugt während des Fluges abflachen lässt.

### Bezugszeichenliste:

- 1: äußerer Behälter, insbesondere Faltkarton
- 2: Scharnier
- 4, 4': innere Umhüllung, insbesondere Vakuumbeutel
- 5: Handpumpe
- 6, 6': Zugseil, insbesondere aus Gummi
- 7: Sieb
- 8, 8': Ware
- 10: Drohne
- 12: Stützbein
- 14: Rotor
- 16: Rotorarm
- 18: Grundkörper
- 19: Gelenk

## Patentansprüche

1. Verpackungsverfahren,
bei dem eine zu verpackende Ware (8, 8') in eine offene innere Umhüllung (4, 4') in einer Verpackung oder in einem äußeren Gestell eingelegt wird,
**dadurch gekennzeichnet, dass** die Umhüllung (4, 4') an elastischen Zugseilen (6, 6') vorgespannt außen in der Verpackung oder dem äußeren Gestell eingehängt wird, um die Ware (8, 8') etwa mittig in der äußeren Verpackung oder in dem äußeren Gestell zu halten, und dass nach dem Einlegen der Ware (8, 8') die Umhüllung (4, 4') geschlossen und weitgehend vakuumiert wird, bis die innere Umhüllung (4, 4') eng an der Ware (8, 8') anliegt, wobei das Vakuumieren eine zusätzliche Dehnung der Zugseile (6, 6') bewirkt, mithin das zumindest weitgehende Vakuumieren die Zugseile (6, 6') weiter gespannt hat.

2. Verpackungsverfahren nach Anspruch 1,
**dadurch gekennzeichnet, dass** die Zugseile (6, 6') außen in Stützbeine (12) einer Drohne eingehängt werden, welche Stützbeine ein Äußeres der Verpackung sind, wobei besonders bevorzugt nach dem Vakuumieren die Stützbeine (12) weiter spreizbar sind, um je nach Größe und Form der Ware während des Fluges der Drohne deren Aerodynamik zu verbessern.

3. Transportverpackung mit einem äußeren Behälter (1) und einer vakuumierbaren inneren Umhüllung (4), wobei zwischen dem äußeren Behälter (1) und der inneren Umhüllung (4) zumindest zwei Seile (6) gespannt sind, von denen zumindest eines reversibel dehnbar ausgebildet ist,
**dadurch gekennzeichnet, dass** eine Vakuumierpumpe (5) an die innere Umhüllung (4) derart angeschlossen ist oder ein Vakuumieranschluss von der Umhüllung (4) nach außen derart durch den äußeren Behälter (1) hindurch geleitet und außen verschließbar ist, und dass die innere Umhüllung und die zumindest zwei Seile so beschaffen sind, dass mittels des Evakuierens der inneren Umhüllung die zumindest zwei Seile (6) weiter gespannt werden.

4. Drohne (10) zum Warentransport, mit einem Grundkörper (18), zumindest einem Rotor (14) und zumindest zwei Stützbeinen (12), und einer an der Drohne befestigten Verpackung,
**dadurch gekennzeichnet, dass** unter dem Grundkörper (18) eine wasserdicht und gasdicht verschließbare Umhüllung (4') vorgespannt aufgenommen ist, in welche Umhüllung (4') eine Ware (8') einlegbar ist, welche um die Ware (8') verschlossene Umhüllung (4') evakuierbar ist, sodass sich die Umhüllung (4') um die Ware herum nach dem Vakuumiervorgang angeschmiegt hat und sodass die Spannung von die Umhüllung aufnehmenden Seilen (6) erhöht ist.

5. Verwendung des Verpackungsverfahrens nach Anspruch 1 oder einer Transportverpackung mit Merkmalen des Anspruchs 3 zum Warentransport mittels einer Drohne, insbesondere einer Drohne nach Anspruch 4.

## Claims

1. A packaging method,
in which goods (8, 8') to be packed are placed in an open inner envelope (4, 4') in a packaging or in an outer frame,
**characterised in that** the envelope (4, 4') is attached pre-tensioned with elastic pull ropes (6, 6') on the outside of the packaging or the outer frame, in order to keep the goods (8, 8') about centred in the outer packaging or the outer frame, and that the envelope (4, 4') is closed and mostly evacuated after insertion of the goods (8, 8') until the inner envelope (4, 4') is hugging the goods (8, 8') tightly, wherein evacuation causes an additional stretching of the pull ropes (6, 6'), wherein the evacuation at least to the greatest part has further tensioned the pull ropes (6, 6').

2. The packaging method of claim 1,
**characterised in that** the pull ropes (6, 6') are hooked into the support legs (12) of a drone on the outside, with the support legs constituting an outside of the packaging, wherein the support legs (12) can particularly preferably be further spread after evacuation in order to improve the drone's aerodynamics in flight depending on the size and shape of the goods.

3. A transport packaging with an outer container (1) and an inner envelope (4) that can be evacuated, wherein at least two ropes (6) are tensioned between the outer container (1) and the inner envelope (4), at least one of which is formed reversibly expansible, **characterised in that**
an evacuation pump (5) is connected to the inner envelope (4) or an evacuation connection from the envelope (4) to the outside is thus routed through the outer container (1) and closable on the outside, and that the inner envelope and the at least two ropes are characterised so that the at least two ropes (6) are further tensioned by evacuation of the inner envelope.

4. A drone (10) for goods transport, with a basic body (18), at least one rotor (14), and at least two support legs (12), and a packaging attached to the drone,
**characterised in that** a watertightly and gas-tightly closable envelope (4') is held pre-tensioned under the basic body (18), wherein goods (8') can be inserted in the envelope (4') in which the envelope (4') closed around the goods (8') can be evacuated so that the envelope (4') has tightly hugged the goods after evacuation and so that the tension of ropes (6) taking up the envelope is increased.

5. Use of the packaging method of claim 1 or a transport packaging with features of claim 3 for goods transport by way of a drone, in particular a drone of claim 4.

## Revendications

1. Processus d'emballage,
dans lequel une marchandise à emballer (8, 8') est placée dans une enveloppe intérieure ouverte (4, 4') dans un emballage ou dans un cadre extérieur,
**caractérisé en ce que** l'enveloppe (4, 4') est suspendue à des câbles de traction élastiques (6, 6') prétendus à l'extérieur dans l'emballage ou dans le cadre extérieur, pour maintenir la marchandise (8, 8') approximativement au centre de l'emballage extérieur ou dans le cadre extérieur, et **en ce qu'**après l'insertion des marchandises (8, 8'), l'enveloppe (4, 4') est fermée et en grande partie scellée sous vide jusqu'à ce que l'enveloppe intérieure(4, 4') soit placée étroitement autour des marchandises (8, 8'), l'aspiration provoquant un étirement supplémentaire des câbles de traction (6, 6'), par conséquent l'aspiration au moins étendue a encore étiré les câbles de traction (6, 6').

2. Procédé d'emballage selon la revendication 1,
**caractérisée en ce que**, les câbles de traction (6, 6') sont suspendus à l'extérieur dans les pieds d'appui (12) d'un drone, les pieds d'appui étant un aspect extérieur de l'emballage, les pieds d'appui (12) étant de préférence plus extensibles après la mise sous vide, afin d'améliorer l'aérodynamique du drone en fonction de sa taille et de sa forme.

3. Emballage de transport avec un récipient extérieur (1) et une enveloppe intérieure sous vide (4), dans lequel au moins deux câbles (6) sont tendus entre le récipient extérieur (1) et l'enveloppe intérieure (4), dont au moins un est conçu pour être extensible de manière réversible, **caractérisé en ce que** une pompe à vide (5) est reliée à l'enveloppe intérieure (4) de cette manière ou une connexion à vide de l'enveloppe (4) vers l'extérieur est passée à travers le récipient extérieur (1) et peut être fermée à l'extérieur, et que l'enveloppe intérieure et au moins deux câbles sont conçus de telle sorte que au moins deux câbles (6) soient étirés davantage en évacuant la gaine intérieure.

4. Drone (10) pour le transport de marchandises comprenant un corps de base (18), au moins un rotor (14) et au moins deux pieds d'appui (12) et un emballage fixé au drone,
**caractérisé en ce que**, sous le corps de base (18) est logée une enveloppe étanche à l'eau et au gaz (4') prétendue, dans laquelle (4') une marchandise peut être placée (8'), qui peut être évacuée de l'enveloppe (4') scellée autour de la marchandise (8') de sorte que l'enveloppe (4') soit enroulée autour de la marchandise après le processus de mise sous vide et que la tension des câbles (6') recevant l'enveloppe (4')soit augmentée.

5. Utilisation du procédé d'emballage selon la revendication 1 ou d'un emballage de transport avec les caractéristiques de la revendication 3 pour le transport de marchandises au moyen d'un drone, notamment un drone selon la revendication 4.
